# EUROPEAN PATENT SPECIFICATION

(11) **EP 1 602 519 B1**
(45) Date of publication and mention of the grant of the patent: **11.07.2007**
(21) Application number: 05010903.2
(22) Date of filing: 19.05.2005
(51) Int. Cl.: B60K 17/24, B60K 17/16, F16C 25/06

(54) **Support structure of a power transmission shaft and differential gear for a vehicle**
Abstützanordnung für eine Antriebswelle und ein Differentialgetriebe für ein Fahrzeug
Structure de support pour arbre d'entraînement et différentiel pour véhicule

(30) Priority: 03.06.2004 JP 2004166292
(43) Date of publication of application: 07.12.2005
(73) Proprietor: Mazda Motor Corporation, Aki-gun, Hiroshima 730-8670 (JP)
(72) Inventor: Mito, Eiji Mazda Motor Corporation, Aki-gun Hiroshima 730-8670 (JP)
(74) Representative: Müller-Boré & Partner Patentanwälte

(56) References cited:
- EP-A- 1 288 519
- GB-A- 1 537 585
- US-A- 3 095 762
- US-A- 5 560 687

## Description

The present invention relates to a support structure for a power transmission shaft in a differential gear for a vehicle and to a differential gear for a vehicle equipped therewith.

Conventionally, the following power transmission shaft having a support structure is known (see, for example, Japanese Patent Laid-Open Publication Nos. 2002-147569 and 2003-74598). Namely, there are provided the power transmission shaft which is equipped with an input portion for receiving a power at one end thereof and a drive gear for transmitting the power at the other end thereof, a differential carrier on which the power transmission shaft is supported, first and second bearings to rotatably support the power transmission shaft on the differential carrier, the first and second bearings being provided in serial order from the one end of the power transmission, and a screw lock nut which is disposed on the power transmission shaft.

A power transmission shaft including the features of the preamble of claim 1 is known from GB-A-1537 585.

Herein, the above-described screw lock nut functions so as to apply a preload to the first and second bearings, thereby supporting the power transmission shaft stably. As a result, noises and breakage of the bearings can be prevented properly.

Generally, since a large rotational torque from an engine is transmitted to the above-described power transmission shaft, a reaction force toward the above-described one end of the power transmission shaft is generated at the first and second bearings which support the power transmission shaft. This reaction force functions so as to cause the screw lock nut pressing the bearings to be rotated and loosened.

Accordingly, in the event that the larger rotational torque is transmitted to the power transmission shaft, the larger fastening torque needs to be applied to the screw lock nut to prevent the lock nut from being loosened properly.

However, since there is a limit to a face pressure the screw lock nut can receive, too large fastening torque might cause a problem of breakage of the screw lock nut.

Also, applying such a large fastening torque to the screw lock nut would need some particular equipments which is necessary for such large fastening torque.

Further, the application of large fastening torque results in the first and second bearings being pressed axially greatly, and thereby the rotational friction of the power transmission shaft would increase inappropriately. This might cause another problem of deterioration of durability of the first and second bearings.

The present invention has been devised in view of the above-described problems, and an object of the present invention is to prevent the screw lock nut from being loosened properly, without increasing the fastening torque of the screw lock nut improperly, particularly even if the rotational torque being transmitted to the power transmission shaft is considerably large.

This object is solved by a support structure for a power transmission shaft according to the present invention of claim 1 and by a differential gear for a vehicle according to claim 8. Preferred embodiments of the present invention are subject of the dependent claims.

According to the present invention, there is provided a support structure for a power transmission shaft in a differential gear for a vehicle, the power transmission shaft being equipped with an input portion for receiving a power at one end thereof and a drive gear for transmitting the power at the other end thereof and being rotatably supported on a differential carrier by means of first and second bearings, the first and second bearings being provided in serial order from said one end of the power transmission, the support structure comprising:
a screw lock nut which is to be disposed on said power transmission shaft;
an anti-loosening spacer which is to be disposed on said power transmission shaft between said screw lock nut and an inner race of said first bearing, the anti-loosening spacer being configured so as to be pressed and moved forward on the power transmission shaft by a rotation of said screw lock nut,
wherein said anti-loosening spacer includes a tooth and groove portion which is formed at an inner periphery thereof, said power transmission shaft includes a tooth and grove portion which is formed at an outer periphery thereof so as to engage with said tooth and groove portion of the anti-loosening spacer, and a tooth line of said tooth and groove portion of the anti-loosening spacer and a tooth line of said tooth and groove portion of the power transmission shaft are configured so as to extend in a substantially axial direction of the power transmission shaft but with a specified difference in angle thererbetween, whereby there can exist a specified magnitude of backlash in a rotational direction between the anti-loosening spacer and the power transmission shaft at the beginning of the rotation of said screw lock nut, and said specified magnitude of backlash can be eliminated according to the rotation of the screw lock nut.

According to this structure, as the anti-loosening spacer is or can be moved forward by the rotation of the screw lock nut, the backlash between the anti-loosening spacer and the power transmission shaft, which has existed at the beginning, is eliminated substantially. Namely, the anti-loosening spacer engages with the power transmission shaft firmly, and thereby the anti-loosening spacer can be locked firmly. As a result, the screw lock nut can be prevented from being loosened properly by this locked spacer.

According to a preferred embodiment of the present invention, an angle of chamfer formed at an end corner of the tooth and groove portion of the anti-loosening spacer is configured so as to be smaller than that formed at an end corner of the tooth and groove portion of the power transmission shaft.

Accordingly, since as the anti-loosening spacer is moved forward by the rotation of the screw lock nut, the chamfered end portion of the tooth and groove portion of the anti-loosening spacer contacts and starts sliding smoothly on the chamfered end portion of the tooth and groove portion of the power transmission shaft, their teeth and grooves engage with each other smoothly.

According to another preferred embodiment of the present invention, a hardening treatment is applied at least to a face of the anti-loosening spacer which contacts the inner race of the first bearing.

Accordingly, since the contacting face of the anti-loosening spacer with the inner race of the first bearing is hardened by the hardening treatment, the contact face can be prevented properly from being worn away or dented by a large pressure generating thereat.

According to further another preferred embodiment of the present invention, an interference of insertion pressure between the inner race of the first bearing and the power transmission shaft is configured so as to be smaller than that of insertion pressure between an inner race of the second bearing and the power transmission shaft.

Accordingly, since the interference of insertion pressure between the inner race of the first bearing and the power transmission shaft is smaller than that of insertion pressure between the inner race of the second bearing and the power transmission shaft, the frictional resistance generating between the inner race of the first bearing and the power transmission shaft can be reduced, and thereby the fastening torque of the screw lock nut can be reduced, compared with the case where both the interference are configured so as to be similar.

According to further another preferred embodiment of the present invention, a chamfer portion is provided at one, preferably at both end corners of said tooth and groove portion of the anti-loosening spacer.

According to still another preferred embodiment of the present invention, a chamfer portion is provided at one end corner of said tooth and groove portion of the power transmission shaft, the end corner being located at the side opposite to the first bearing.

According to further another preferred embodiment of the present invention, an angle of the chamfer formed at the anti-loosening spacer is configured so as to be smaller than an angle of the chamfer formed at the drive pinion shaft.

According to the invention, there is further provided a differential gear for a vehicle, comprising:
a power transmission shaft which is equipped with an input portion for receiving a power at one end thereof and a drive gear for transmitting the power at the other end thereof;
a differential carrier on which said power transmission shaft is supported;
first and second bearings to rotatably support said power transmission shaft on said differential carrier, the first and second bearings being provided in serial order from said one end of the power transmission; and
a support structure according to the invention or a preferred embodiment thereof.

According to a preferred embodiment of the present invention, there is further provided a differential gear for a vehicle, comprising a power transmission shaft which is equipped with an input portion for receiving a power at one end thereof and a drive gear for transmitting the power at the other end thereof, a differential carrier on which the power transmission shaft is supported, first and second bearings to rotatably support the power transmission shaft on the differential carrier, the first and second bearings being provided in serial order from the one end of the power transmission, a screw lock nut which is disposed on the power transmission shaft, an anti-loosening spacer which is disposed on the power transmission shaft between the screw lock nut and an inner race of the first bearing, the anti-loosening spacer being configured so as to be pressed and moved forward on the power transmission shaft by a rotation of the screw lock nut. Further, the anti-loosening spacer includes a tooth and groove portion which is formed at an inner periphery thereof, the power transmission shaft includes a tooth and grove portion which is formed at an outer periphery thereof so as to engage with the tooth and groove portion of the anti-loosening spacer, and a tooth line of the tooth and groove portion of the anti-loosening spacer and a tooth line of the tooth and groove portion of the power transmission shaft are configured so as to extend in a substantially axial direction of the power transmission shaft but with a specified difference in angle thererbetween, whereby there can exist a specified magnitude of backlash in a rotational direction between the anti-loosening spacer and the power transmission shaft at the beginning of the rotation of the screw lock nut, and the specified magnitude of backlash can be eliminated according to the rotation of the screw lock nut.

According to further another preferred embodiment of the present invention, the differential gear for a vehicle comprises a wet multi-plate clutch device to control a distribution ratio of drive power between front wheels and rear wheels of the vehicle, and a power from the wet multi-plate clutch device is transmitted to the input portion of the transmission shaft.

Accordingly, there can be provided a proper support structure of the power transmission shaft in the differential gear equipped with the wet multi-pale clutch device for a four-wheel driving vehicle.

Other features, aspects, and advantages of the present invention will become apparent from the following description which refers to the accompanying drawings. It should be understood that even though embodiments are separately described, single features thereof may be combined to additional embodiments.
FIG. **1** is a plan sectional view illustrating a differential gear with a support structure of a power transmission shaft according to an embodiment of the present invention.
FIG. **2** is an enlarged sectional view of an anti-loosening spacer.
FIG. **3** is an enlarged side view of part of a drive pinion shaft.
FIG. **4** is an explanatory diagram of a backlash existing between the anti-loosening spacer and the drive pinion shaft.

Hereinafter, a preferred embodiment of the present invention will be described referring to the accompanying drawings. Herein, the following discloses an essentially preferred embodiment, and the present invention should not to be limited to this embodiment described specifically here in a scope of its application and use.

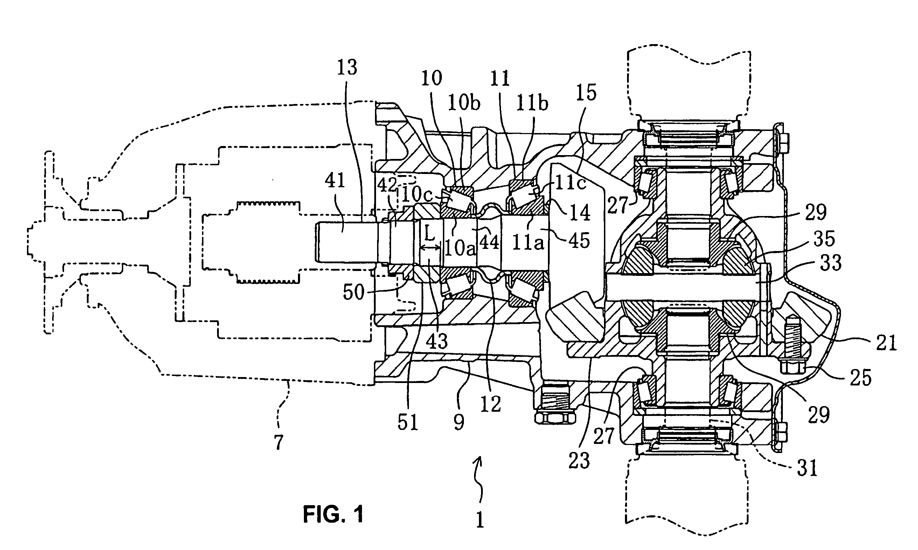

FIG. **1** illustrates a differential gear **1** of rear wheels preferably for a four-wheel driving vehicle. A wet multi-plate type of electromagnetic clutch device **7** (illustrated by a two-dotted broken line in FIG. **1**) is or is to be coupled to the front of the differential gear **1.** A drive power of a vehicle engine is transmitted to the electromagnetic clutch device **7** via a propeller shaft, not illustrated, and the electromagnetic clutch device **7** controls a distribution ratio of the drive power to front wheels and the rear wheels of the vehicle.

The differential gear **1** is enclosed by a differential carrier **9** which extends in a substantially longitudinal direction of the vehicle. Some lubricating oil is kept within the differential carrier **9.** First and second bearings for drive pinions **10** and **11,** as preferred first and second bearings, are provided, in serial order from the front, at a front inner portion of the differential carrier **9.** These first and second bearings for drive pinions **10** and **11** rotatably support a drive pinion shaft **13** which transmits the rotation and torque from the electromagnetic clutch device **7.** The drive pinion shaft **13** is equipped with a spline **41,** as a preferred input portion for receiving the power, at one end thereof and a drive pinion gear **15,** as a drive gear for transmitting the power, at the other end thereof. The spline **41** is or is to be coupled to a rotational shaft (not illustrated) of the electromagnetic clutch device **7** via a spline coupling.

Also, a ring gear **21** with an axis extending in a direction at an angle different from 0° or 180°, preferably in a substantially vehicle width direction is rotatably supported at a rear inner portion of the differential carrier **9.** The above-described drive pinion shaft **13** is so as to be placed being offset below from the ring gear **21,** and the drive pinion gear **15** engages with the ring gear **21.** In other words, the drive pinion shaft **13** is arranged in an orientation being such that its rotation axis is substantially normal to the rotation axis of the ring gear **21** while being spaced apart therefrom substantially along the vertical direction thus being offset thereto. Accordingly, the axial center or axial center line of the drive pinion shaft **13** is offset with respect to the axial center or axial center line of the ring gear **21** Accordingly, the rotation and torque from the electromagnetic clutch **7** is transmitted to the ring gear **21,** changing the direction by an angle different from 0° or 180°, preferably a substantially right angle.

A differential gear case **23** is integrally or unitarily connected with the ring gear **21** preferably via a bolt **25** or by a spline connection. This differential gear case **23** is rotatably supported by lateral (right and left) side bearing **27** which are provided at the differential carrier **9.** And, lateral (right and left) side gears **29** are disposed in the differential gear case **23,** and these side gears **29** are coupled to drive shafts **31** for driving the right and left vehicle wheels, respectively. The side gears **29** engage with differential pinion gears **35** which are fixed to a differential pinion shaft **33.** Accordingly, in the event that there occurs a difference in rotational speed between the right and left vehicle wheels, the differential is applied to the right and left drive shafts **31,** thereby preventing slip of tires properly.

Between the above-described spline **41** and the drive pinion gear **15** on the drive pinion shaft **13,** are provided, in serial order from the side of spline **41,** a screw portion **42** which has a greater diameter than the spline **41,** a serration portion **43** which has a greater diameter than the screw portion **42,** a first-bearing contact face **44** which has a greater diameter than the serration portion **43** and is provided for the first bearing for drive pinion **10,** a second-baring contact face **45** which has a greater diameter than the first-bearing contact face **44** and is provided for the second bearing for drive pinion **11.**

Between the first bearing for drive pinion **10** and the second bearing for drive pinion **11,** is provided a distance piece (spacer) **12.** This distance piece **12** preferably is made of a plastically deformed spacer which can generate a reaction force against even a small magnitude of displacement (torsion). Both axial ends of the distance spice **12** respective contact inner races **10a** and **11a** of the above-described first and second bearings for drive pinions **10** and **11.**

Also, a ring shim (or adjustment and/or distance disc or ring or element) **14** is provided between the inner race **11a** of the second bearing for drive pinion **11** and the drive pinion gear **15.** This shim **14** adjusts a clearance existing between the inner race **11a** and the drive pinion gear **15,** and thus a tooth contact between the drive pinion gear **15** and the ring gear **21** can be properly adjusted by this shim **14.**

Also, an interference of insertion pressure between the inner race **10a** of the first bearing for drive pinion **10** and the first-bearing contact face **44** is adjusted so as to be smaller than that between the inner race 11a of the second bearing for drive pinion **11** and the second-bearing contact face **45.**

A screw lock nut **50** is provided on the screw portion **42** of the drive pinion shaft **13,** and this lock nut **50** is provide so as to apply a preload or biasing force to the first and second bearings for drive pinions **10** and **11** by a rotation of this lock nut **50.**

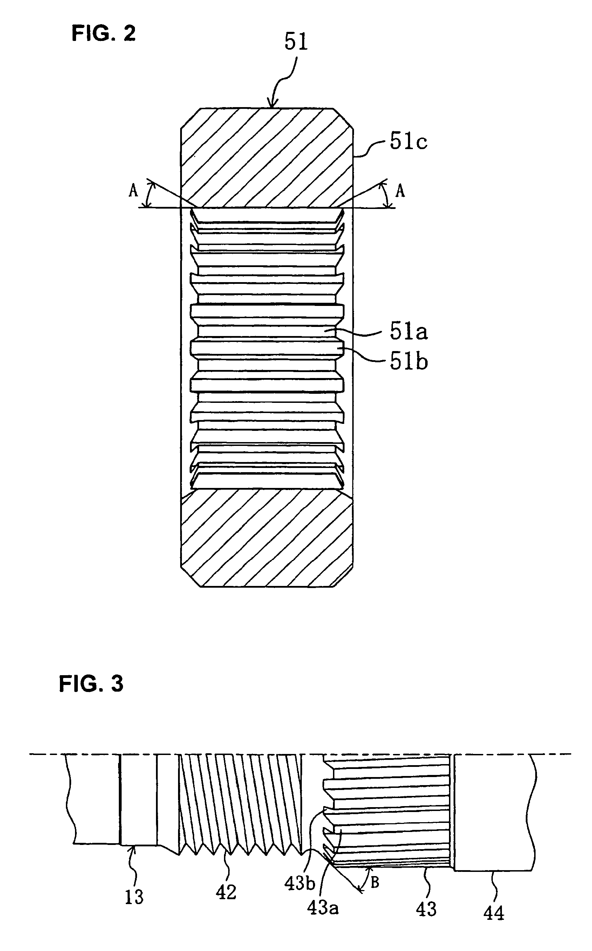

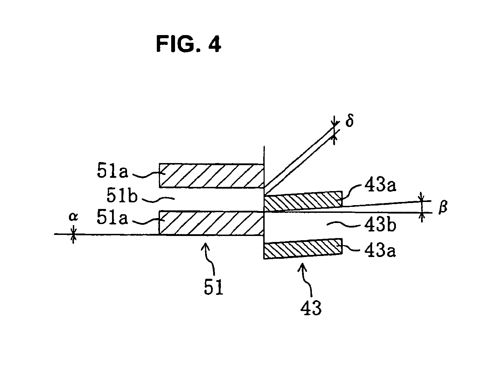

Next, there is provided a cylindrical anti-loosening spacer **51** between the screw lock nut **50** and the first bearing for drive pinion **10.** As illustrated in FIG. **2,** this anti-loosening spacer **51** includes teeth or projections **51a** and grooves **51b,** as a preferred tooth and groove portion of the anti-loosening spacer **51,** which are formed at an inner periphery thereof and a tooth line of which extend in a substantially axial direction thereof. Meanwhile, as illustrated in FIG. **3,** teeth **43a** and groves **43b,** as a preferred tooth and groove portion of the drive pinion shaft **13,** are formed on the outer periphery of the serration portion **43** of the drive pinion shaft **13,** a tooth line of which extend in the substantially axial direction, so as to engage with the above-described teeth and grooves **51a** and **51b** of the anti-loosening spacer **51.** As illustrated in the enlarged view of FIG. **4**, there exists a specified (predetermined or predeterminable) magnitude of backlash δ in the rotational direction between the teeth and grooves **51a** and **51b** of the anti-loosening spacer **51** and the teeth and grooves **43a** and **43b** of the drive pinion shaft **13** at the beginning of a rotation of the screw lock nut **50.**

Specifically, the tooth line of the teeth and grooves **51a** and **51b** of the anti-loosening spacer **51** extends with a specified angle α with respect to the axial direction, whereas the tooth line of the teeth and grooves **43a** and **43b** of the drive pinion shaft **13** extends with a specified angle β with respect to the axial direction. Herein, both angles α and β are different in magnitude from each other (i.e., α ≠ β). In the present embodiment, the angle α preferably is set at approximately 0 degrees (α = 0°) and/or β preferably is set at approximately 22 minutes (β = 22'), with approximately 12.6 mm of an engagement length **L** (see FIG. **1**) of the teeth and grooves **51a** and **51b** and the teeth and grooves **43a** and **43b.** Herein, in the event that the engagement length **L** is set at a shorter one, it is preferable that the angle β may be set at a greater one in case of the angle α remaining at 0 degree (α = 0°). In other words, in the event that the engagement length **L** is set in a range of about 8.0 mm to about 13.0 mm, it is preferable that the angle β may be set at a value of between about 50 minutes to about 20 minutes, in case of the angle α remaining at 0 degree (α = 0°).

Thus, there is a difference in angle magnitude between the angle α and the angle β. Accordingly, the backlash δ becomes smaller as the anti-loosening spacer **51** is moved forward in the axial direction by the rotation of the screw lock nut **50.** And, finally, when the screw lock nut **50** comes to a point of a specified (predetermined or predeterminable) magnitude of the engagement length **L,** the backlash δ is eliminated substantially (δ ≈ 0).

Also, as illustrated in FIG. **2,** there are provided chamfer or a slanted portion at both end corners of the above-described teeth and grooves **51a** and **51b** of the anti-loosening spacer **51.** Meanwhile, as illustrated in FIG. **3,** there are also provided chamfer or a slanted portion at one end corner, which is located at the side of the screw portion **42,** of the teeth and grooves **43a** and **43b** of the drive pinion shaft **13.** Herein, an angle **A** of the chamfer formed at the anti-loosening spacer **51** is configured so as to be smaller than an angle **B** of the chamfer formed at the drive pinion shaft **13** (**A<B**). In the present embodiment, for example, the angle **A** preferably is set between about 30° to about 39°, more preferably at approximately 35 degrees (35°), and the angle **B** is set between about 40° and about 50°, more preferably at approximately 45 degrees (45°). Herein, in the event that the chamfer is provided at the both end corners of the anti-loosening spacer **51** as illustrated, the spacer **51** can be installed from any side, resulting in an easy installation.

Also, a heat hardening treatment preferably is applied to the faces (both sides) **51c** of the anti-loosening spacer **51** which is supposed to contact the inner race **10a** of the first bearing for drive pinion **10.**

### - Assembling Process -

Hereinafter, an assembling process of the support structure of the drive pinion shaft **13** according to the present embodiment will be described.

First, there is provided the shim **14** which is selected for properly adjusting the tooth contact between the drive pinion gear **15** and the ring gear **21.**

Next, after the ring shim **14** has been inserted into the drive pinion shaft **13** from the side of spline **41** so as to contact the drive pinion gear **15,** the inner race **11a** of the second bearing for drive pinion **11** is pushed in and fixed.

Subsequently, the outer races **10b** and **11b** of the first and second bearings for drive pinions **10** and **11** are pushed in and fixed.

Then, rollers **11c** are placed on the inner race **11a** of the second bearing for drive pinion **11** which has been fixed on the drive pinion shaft **13,** and subsequently the drive pinion shaft **13** is at least partly inserted into the differential carrier **9** from the rear side (the right in FIG. **1**).

Next, the distance piece **12,** and the inner race **10a** and the rollers **10c** of the first bearing for drive pinion **10** are respectively inserted in order into the drive pinion shaft **13** from the front side (the left in FIG. **1**) of the differential carrier **9**.

After that, the anti-loosening spacer **51** and the screw lock nut **50** are inserted in order into or onto the drive pinion shaft **13.**

Then, the screw lock nut **50** is pushed toward the drive pinion gear **15** so that the screw portion of the screw lock nut **50** can at least partly overlap a little with the screw portion **42** of the drive pinion shaft **13.**

Finally, the screw lock nut **50** is fastened by a lock-nut fastening device preferably with an appropriate (predetermined or predeterminable) torque.

Herein, as the anti-loosening spacer **51** is moved forward by the rotation of the screw lock nut **50,** the teeth and grooves **51a** and **51b** of the anti-loosening spacer **51** and the teeth and grooves **43a** and **43b** of the drive pinion shaft **13** start engaging with each other. Namely, the chamfered end portion of the teeth and grooves **51a** and **51b** contacts and starts sliding smoothly on the chamfered end portion of the teeth and grooves **43a** and **43b.**

As the anti-loosening spacer **51** further advances according to the additional rotation of the screw lock nut **50,** the teeth and grooves **51a** and **51b** gradually engage with the teeth and grooves **43a** and **43b** because there exists the specified (predetermined or predeterminable) difference in angle between the both tooth lines of the teeth and grooves **51a** and **51b** and the teeth and grooves **43a** and **43b.**

And, after the anti-loosening spacer **51** has advanced furthermore by the rotation of the screw lock nut **50,** the backlash **δ** between the anti-loosening spacer **51** and the drive pinion shaft **13,** which existed at the beginning, vanishes substantially.

A further rotation of the screw lock nut **50** from this point provides a stiff engagement between the anti-loosening spacer **51** and the drive pinion shaft **13,** and thereby the anti-loosening spacer **51** can be locked firmly. As a result, the screw lock nut **50** can be prevented from being loosened by this locked spacer **51.**

As described, according to the present embodiment, there are provided the drive pinion shaft **13** which is equipped with the spline **41** for receiving the power at one end thereof and the drive pinion gear **15** for transmitting the power at the other end thereof, the differential carrier **9** on which the drive pinion shaft **13** is supported, the first and second bearings for drive pinion **10** and **11** to rotatably support the drive pinion shaft **13** on the differential carrier **9,** the first and second bearings for drive pinion **10** and **11** being provided in serial order from the one end of the drive pinion shaft **13,** the screw lock nut **50** which is disposed on the drive pinion shaft **13,** and the anti-loosening spacer **51** which is disposed on the drive pinion shaft **13** between the screw lock nut **50** and the inner race **10a** of the first bearing for drive pinion **10,** the anti-loosening spacer **51** being configured so as to be pressed and moved forward on the drive pinion shaft **13** by the rotation of the screw lock nut **50.** Further, the anti-loosening spacer **51** includes the teeth and grooves **51a** and **51b** which are formed at the inner periphery thereof, the drive pinion shaft **13** includes the teeth and grooves **43a** and **43b** which are formed at the outer periphery of the serration portions **43** thereof so as to engage with the teeth and grooves **51a** and **51b** of the anti-loosening spacer **51,** and the tooth line of the teeth and grooves **51a** and **51b** of the anti-loosening spacer **51** and the tooth line of the teeth and grooves **43a** and **43b** of the drive pinion shaft **13** are configured so as to extend in the substantially axial direction of the drive pinion shaft **13** but with the specified (predetermined or predeterminable) difference in angle thererbetween, whereby there can exist the specified (predetermined or predeterminable) magnitude of backlash δ in the rotational direction between the anti-loosening spacer **51** and the drive pinion shaft **13** at the beginning of the rotation of the screw lock nut **50,** and the specified magnitude of backlash δ can be eliminated according to the rotation of the screw lock nut **50.**

According to this structure, as the anti-loosening spacer **51** is moved forward by the rotation of the screw lock nut **50,** the backlash δ between the anti-loosening spacer **51** and the drive pinion shaft **13,** which has existed at the beginning, is or can be eliminated substantially. Namely, the anti-loosening spacer **51** engages with the drive pinion shaft **13** firmly, and thereby the anti-loosening spacer **51** can be locked firmly. As a result, the screw lock nut **50** can be prevented from being loosened by this locked spacer **51.**

Further, the angle of chamfer formed at the end corner of the teeth and grooves **51a** and **51b** of the anti-loosening spacer **51** preferably is configured so as to be smaller than that formed at the end corner of the teeth and grooves **43a** and **43b** of the drive pinion shaft **13.** Accordingly, since the teeth and grooves **51a** and **51b** engage smoothly with the teeth and grooves **43a** and **43b,** the spacer **51** may be installed easily into the drive pinion shaft **13.**

Also, the hardening treatment preferably is applied to the face **51c** of the anti-loosening spacer **51** which contacts the inner race **10a** of the first bearing for drive pinion **10.** Accordingly, the inner race **10a** of the first bearing for drive pinion **10** can be prevented from moving axially due to the wear of the face **51c** of the anti-loosening spacer **51,** and thereby the supporting of the drive pinion shaft **13** can be ensured properly.

Further, the interference of insertion pressure between the inner race **10a** of the first bearing for drive pinion **10** and the drive pinion shaft **13** preferably is configured so as to be smaller than that of insertion pressure between the inner race **11a** of the second bearing for drive pinion **11** and the drive pinion shaft **13.** Accordingly, the frictional resistance generating between the inner race **10a** of the first bearing for drive pinion **10** and the drive pinion shaft **13** can be reduced, and thereby the fastening torque of the screw lock nut **50** can be reduced.

Accordingly, there is to be provided the anti-loosening spacer **51** between the screw lock nut **50** and the inner race **10a** of the first bearing for drive pinion **10,** such that it is moved forward by a rotation of the screw lock nut **50,** and there can exist the specified (predetermined or predeterminable) magnitude of backlash δ in the rotational direction between the anti-loosening spacer **51** and the drive pinion shaft **13** at the beginning of the rotation of the screw lock nut **50,** and the specified (predetermined or predeterminable) magnitude of backlash δ can be eliminated according to the rotation of the screw lock nut **50**. Accordingly, the screw lock nut **50** can be properly prevented from being loosened by this locked spacer **51.**

It is useful that the present invention is, for example, applied to the support structure of the power transmission shaft for the four-wheel driving vehicle.

However, the present invention should not be limited to the above-described embodiment, but any other modifications and improvements may be applied within the scope of the present invention.

## Claims

1. A power transmission shaft (**13**) with a support structure for a differential gear **(1)** for a vehicle, the power transmission shaft **(13)** being equipped with an input portion (**41**) for receiving a power at one end thereof and a drive gear (**15**) for transmitting the power at the other end thereof and being rotatably supported on a differential carrier (**9**) by means of first and second bearings (**10, 11**), the first and second bearings (**10, 11**) being provided in serial order from said one end of the power transmission (**13**), the support structure comprising:
a screw lock nut (**50**) which is to be disposed on said power transmission shaft (**13**);
an anti-loosening spacer (**51**) which is to be disposed on said power transmission shaft (**13**) between said screw lock nut (**50**) and an inner race (**10a**) of said first bearing (**10**), the anti-loosening spacer (**51**) being configured so as to be pressed and moved forward on the power transmission shaft (**13**) by a rotation of said screw lock nut (**50**), **characterised in that**
said anti-loosening spacer (**51**) includes a tooth and groove portion (**51a, 51b**) which is formed at an inner periphery thereof, said power transmission shaft (**13**) includes a tooth and grove portion (**43a, 43b**) which is formed at an outer periphery thereof so as to engage with said tooth and groove portion (**51a, 51b**) of the anti-loosening spacer (**51**), and a tooth line of said tooth and groove portion (**51a**, **51b**) of the anti-loosening spacer (**51**) and a tooth line of said tooth and groove portion (**43a, 43b**) of the power transmission shaft (**13**) are configured so as to extend in a substantially axial direction of the power transmission shaft (**13**) but with a specified difference in angle thererbetween, whereby there can exist a specified magnitude of backlash (δ) in a rotational direction between the anti-loosening spacer **(51)** and the power transmission shaft **(13)** at the beginning of the rotation of said screw lock nut, and said specified magnitude of backlash (δ) can be eliminated according to the rotation of the screw lock nut **(50).**

2. The power transmission shaft of claim 1, wherein an angle of chamfer formed at an end corner of said tooth and groove portion **(51a, 51 b)** of the anti-loosening spacer **(51)** is configured so as to be smaller than that formed at an end corner of said tooth and groove portion **(43a, 43b)** of the power transmission shaft **(13).**

3. The power transmission shaft of one of the preceding claims, wherein a hardening treatment is applied at least to a face **(51c)** of said anti-loosening spacer **(51)** which contacts said inner race **(10a)** of the first bearing **(10).**

4. The power transmission shaft of one of the preceding claims, wherein an interference of insertion pressure between said inner race **(10a)** of the first bearing **(10)** and said power transmission shaft **(13)** is configured so as to be smaller than that of insertion pressure between an inner race **(11a)** of said second bearing **(11)** and said power transmission shaft **(13).**

5. The power transmission shaft of one of the preceding claims, wherein a chamfer portion is provided at one, preferably at both end corners of said tooth and groove portion **(51a, 51b)** of the anti-loosening spacer **(51).**

6. The power transmission shaft of one of the preceding claims, wherein a chamfer portion is provided at one end corner of said tooth and groove portion **(43a, 43b)** of the power transmission shaft **(13),** the end corner being located at the side opposite to the first bearing **(11).**

7. The power transmission shaft of claim 6 in combination with claim 5, wherein an angle **(A)** of the chamfer formed at the anti-loosening spacer **(51)** is configured so as to be smaller than an angle **(B)** of the chamfer formed at the drive pinion shaft **(13).**

8. A differential gear **(1)** for a vehicle, comprising:
a power transmission shaft **(13)** which is equipped with an input portion **(41)** for receiving a power at one end thereof and a drive gear **(15)** for transmitting the power at the other end thereof;
a differential carrier **(9)** on which said power transmission shaft **(13)** is supported;
first and second bearings **(10, 11)** to rotatably support said power transmission shaft **(13)** on said differential carrier **(9),** the first and second bearings **(10, 11)** being provided in serial order from said one end of the power transmission **(13);** and
a support structure according to one of the preceding claims.

9. The differential gear **(1)** for a vehicle of claim 8, wherein said differential gear **(1)** for a vehicle comprises a wet multi-plate clutch device **(7)** to control a distribution ratio of drive power between front wheels and rear wheels of the vehicle, and a power from said wet multi-plate clutch device **(7)** is transmitted to said input portion **(41)** of the transmission shaft **(13).**

10. The differential gear **(1)** for a vehicle according to claim 8 or 9, wherein between the first bearing **(10)** and the second bearing **(11)** is provided a distance piece **(12),** wherein the distance piece **(12)** preferably is made of a plastically deformed spacer and can generate a reaction force against even a small magnitude of displacement.

## Patentansprüche

1. Antriebswelle (13) mit einer Abstützstruktur bzw. -anordnung für ein Differentialgetriebe (1) für ein Fahrzeug, wobei die Antriebswelle (13) mit einem Eingangs- bzw. Eingabeabschnitt (41) zum Aufnehmen bzw. Empfangen einer Leistung bzw. einem Antrieb an einem Ende davon und einem Antriebsgetriebe bzw.
- ritzel (15) für ein Übertragen der Leistung an dem anderen Ende davon ausgerüstet ist und drehbar an einem Differentialträger (9) mittels eines ersten und zweiten Lagers (10, 11) abgestützt ist, wobei das erste und zweite Lager (10, 11) in einer aufeinanderfolgenden bzw. Serienreihenfolge von dem einen Ende der Leistungs- bzw. Antriebsübertragung (13) vorgesehen bzw. zur Verfügung gestellt sind, wobei die Abstützanordnung umfaßt:
eine Schraubensicherungsmutter (50), welche an der Antriebswelle (13) anzuordnen ist;
einen Antilockerungs-Abstandhalter bzw. -Einlegering (51), welcher an der Antriebswelle (13) zwischen der Schraubensicherungsmutter (50) und einer inneren Bahn (10a) des ersten Lagers (10) anzuordnen ist, wobei der Antilockerungs-Abstandhalter (51) konfiguriert ist, um gedrückt bzw. gepreßt und auf der Antriebswelle (13) durch eine Rotation der Schraubensicherungsmutter (50) nach vorne bewegt zu werden, **dadurch gekennzeichnet, daß**
der Antilockerungs-Abstandhalter (51) einen Zahn- und Rillenabschnitt (51a, 51 b) beinhaltet, welcher an einem inneren Umfang davon ausgebildet ist, die Antriebswelle (13) einen Zahn- und Rillenabschnitt (43a, 43b) beinhaltet, welcher an einem äußeren Umfang davon ausgebildet ist, um mit dem Zahn- und Rillenabschnitt (51 a, 51 b) des Antilockerungs-Abstandhalters (51) in Eingriff zu gelangen, und eine Zahnlinie des Zahn- und Rillenabschnitts (51a, 51 b) des Antilockerungs-Abstandhalters (51) und eine Zahnlinie des Zahn- und Rillenabschnitts (43a, 43b) der Antriebswelle (13) konfiguriert sind, um sich in einer im wesentlichen axialen Richtung der Antriebswelle (13), jedoch mit einem bestimmten Unterschied im Winkel davon zu erstrecken, wodurch eine bestimmte Größe eines Spiels (δ) in einer Drehrichtung zwischen dem Antilockerungs-Abstandhalter (51) und der Antriebswelle (13) am Beginn der Rotation der Schraubensicherungsmutter existieren kann, und die bestimmte Größe eines Spiels (δ) gemäß der Rotation der Schraubensicherungsmutter (50) eliminiert werden kann.

2. Antriebswelle nach Anspruch 1, wobei ein Kanten- bzw. Abschrägungswinkel, welcher an einem Endeck bzw. -winkel des Zahn- und Rillenabschnitts (51a, 51 b) des Antilockerungs-Abstandhalters (51) ausgebildet ist, konfiguriert ist, um kleiner als derjenige zu sein, welcher an einem Endeck bzw -winkel des Zahn- und Rillenabschnitts (43a, 43b) der Antriebswelle (13) ausgebildet ist.

3. Antriebswelle nach einem der vorangehenden Ansprüche, wobei eine Härtungsbehandlung auf wenigstens einer Fläche bzw. Seite (51c) des Antilockerungs-Abstandhalters (51) angewandt ist bzw. wird, welche die innere Bahn (10a) des ersten Lagers (10) kontaktiert.

4. Antriebswelle nach einem der vorangehenden Ansprüche, wobei ein Zusammenwirken bzw. Beeinflussen eines Einsetzdrucks zwischen der inneren Bahn (10a) des ersten Lagers (10) und der Antriebswelle (13) konfiguriert ist, um kleiner als dasjenige eines Einsetzdrucks zwischen einer inneren Bahn (11a) des zweiten Lagers (11) und der Antriebswelle (13) zu sein.

5. Antriebswelle nach einem der vorangehenden Ansprüche, wobei ein Abschrägungsabschnitt an einem, vorzugsweise an beiden Endeck(en) bzw. Winkel(n) des Zahn- und Rillenabschnitts (51a, 51 b) des Antilockerungs-Abstandhalters (51) vorgesehen ist.

6. Antriebswelle nach einem der vorangehenden Ansprüche, wobei ein Abschrägungsabschnitt an einem Endeck bzw Winkel des Zahn- und Rillenabschnitts (43a, 43b) der Antriebswelle (13) vorgesehen ist, wobei das Endeck an der Seite gegenüberliegend bzw. entgegengesetzt dem ersten Lager (11) angeordnet ist.

7. Antriebswelle nach Anspruch 6 in Kombination mit Anspruch 5, wobei ein Winkel (A) der Abschrägung, welche an dem Antilockerungs-Abstandhalter (51) ausgebildet ist, konfiguriert ist, um kleiner als ein Winkel (B) der Abschrägung zu sein, welche an der Ausgleichskegelradwelle bzw. Antriebskegelzahnrad (13) ausgebildet ist.

8. Differentialgetriebe (1) für ein Fahrzeug, umfassend:
eine Antriebswelle (13), welche mit einem Eingangs- bzw. Eingabeabschnitt (41) zum Aufnehmen bzw. Empfangen einer Leistung bzw. eines Antriebs an einem Ende davon und einem Antriebsritzel bzw. -getriebe (15) zum Übertragen der Leistung an dem anderen Ende davon ausgerüstet ist;
einen Differentialträger (9), auf welchem die Antriebswelle (13) abgestützt ist;
ein erstes und zweites Lager (10, 11), um drehbar die Antriebswelle (13) an dem Differentialträger (9) abzustützen, wobei das erste und zweite Lager (10, 11) in aufeinanderfolgender bzw. serieller Anordnung von dem einen Ende der Antriebs- bzw. Leistungsübertragung (13) vorgesehen sind; und
eine Abstützanordnung bzw. -struktur gemäß einem der vorangehenden Ansprüche.

9. Differentialgetriebe (1) für ein Fahrzeug nach Anspruch 8, wobei das Differentialgetriebe (1) für ein Fahrzeug eine Naß-Mehrfachplatten-Kupplungsvorrichtung (7) umfaßt, um ein Verteilungsverhältnis einer Antriebsleistung zwischen Vorderrädern und Hinterrädern des Fahrzeugs zu regeln bzw. zu steuern, und eine Leistung von der Naß-Mehrfachplatten-Kupplungsvorrichtung (7) auf den Eingabeabschnitt (41) der Antriebs- bzw. Übertragungswelle (13) übertragen ist bzw. wird.

10. Differentialgetriebe (1) für ein Fahrzeug nach Anspruch 8 oder 9, wobei zwischen dem ersten Lager (10) und dem zweiten Lager (11) ein Abstandsstück (12) vorgesehen ist, wobei das Abstandsstück (12) vorzugsweise aus einem plastisch deformierten Abstandhalter hergestellt ist und eine Reaktionskraft selbst bei einer geringen Größe einer Verlagerung erzeugen bzw. generieren kann.

## Revendications

1. Arbre de transmission de force motrice (13) comportant une structure de support pour un engrenage différentiel (1) pour un véhicule, l'arbre de transmission de force motrice (13) étant équipé d'une partie d'entrée (41) pour réceptionner une force motrice sur une extrémité de celui-ci et d'un planétaire de différentiel (15) pour transmettre la force motrice à l'autre extrémité de celui-ci, et étant soutenu avec faculté de rotation sur un support de différentiel (9) au moyen d'un premier et d'un second palier (10, 11), le premier et le second palier (10, 11) étant prévus dans un ordre sériel depuis ladite extrémité de l'arbre de transmission de force motrice (13), la structure de support comprenant :
- un écrou de blocage de vis (50) qui doit être agencé sur ledit arbre de transmission de force motrice (13) ;
- un distancier à anti-desserrement (51) qui doit être agencé sur ledit arbre de transmission de force motrice (13) entre ledit écrou de blocage de vis (50) et une coque intérieure (10a) dudit premier palier (10), le distancier à anti-desserrement (51) étant configuré de manière à être pressé et déplacé vers l'avant sur l'arbre de transmission de force motrice (13) par une rotation dudit écrou de blocage de vis (50),
**caractérisé en ce que** :
- ledit distancier à anti-desserrement (51) inclut une partie à dentures et à rainures (51a, 51b) qui est formée sur une périphérie intérieure de celui-ci ;
- ledit arbre de transmission de force motrice (13) inclut une partie à dentures et à rainures (43a, 43b) qui est formée sur une périphérie extérieure de celui-ci, de manière à s'engager avec ladite partie à dentures et à rainures (51a, 51b) du distancier à anti-desserrement (51) ; et
- une ligne dentée de ladite partie à dentures et à rainures (51a, 51b) du distancier à anti-desserrement (51) et une ligne dentée de ladite partie à dentures et à rainures (43a, 43b) de l'arbre de transmission de force motrice (13) sont configurées de manière à s'étendre dans une direction sensiblement axiale de l'arbre de transmission de force motrice (13), mais avec une différence spécifiée dans l'angle entre celles-ci, sachant qu'il peut exister une grandeur spécifiée de jeu (δ) dans une direction de rotation entre le distancier à anti-desserrement (51) et l'arbre de transmission de force motrice (13) au début de la rotation dudit écrou de blocage de vis, et ;
- ladite grandeur spécifiée de jeu (δ) peut être éliminée en fonction de la rotation de l'écrou de blocage de vis (50).

2. Arbre de transmission de force motrice selon la revendication 1, dans lequel un angle de biseautage formé sur un coin terminal de ladite partie à dentures et à rainures (51a, 51b) du distancier à anti-desserrement (51) est configuré de manière à être plus petit que celui qui est formé sur un coin terminal de ladite partie à dentures et à rainures (43a, 43b) de l'arbre de transmission de force motrice (13).

3. Arbre de transmission de force motrice selon l'une des revendications précédentes, dans lequel un traitement de trempe est appliqué au moins sur une face (51c) dudit distancier à anti-desserrement (51), laquelle contacte ladite coque intérieure (10a) du premier palier (10).

4. Arbre de transmission de force motrice selon l'une des revendications précédentes, dans lequel une interférence de pression d'insertion entre ladite coque intérieure (10a) du premier palier (10) et ledit arbre de transmission de force motrice (13) est configurée de manière à être plus petite que celle de la pression d'insertion entre une coque intérieure (11a) dudit second palier (11) et ledit arbre de transmission de force motrice (13).

5. Arbre de transmission de force motrice selon l'une des revendications précédentes, dans lequel une partie biseautée est prévue sur un coin terminal, de préférence sur deux coins terminaux de ladite partie à dentures et à rainures (51a, 51 b) du distancier à anti-desserrement (51).

6. Arbre de transmission de force motrice selon l'une des revendications précédentes, dans lequel une partie biseautée est prévue sur un coin terminal de ladite partie à dentures et à rainures (43a, 43b) de l'arbre de transmission de force motrice (13), le coin terminal étant placé sur le côté opposé au premier palier (11).

7. Arbre de transmission de force motrice selon la revendication 6 en combinaison avec la revendication 5, dans lequel un angle (A) du biseautage formé sur le distancier à anti-desserrement (51) est configuré de manière à être plus petit qu'un angle (B) formé sur l'arbre du pignon d'attaque de différentiel (13).

8. Engrenage différentiel (1) pour un véhicule, comprenant :
- un arbre de transmission de force motrice (13) qui est équipé d'une partie d'entrée (41) pour réceptionner une force motrice sur une extrémité de celui-ci et d'un planétaire de différentiel (15) pour transmettre la force motrice à l'autre extrémité de celui-ci ;
- un support de différentiel (9) sur lequel est soutenu ledit arbre de transmission de force motrice (13) ;
- un premier et un second palier (10, 11) pour soutenir ledit arbre de transmission de force motrice (13) avec faculté de rotation sur ledit support de différentiel (9), le premier et le second palier (10, 11) étant prévus dans un ordre sériel depuis ladite extrémité de l'arbre de transmission de force motrice (13) ; et
- une structure de support selon l'une des revendications précédentes.

9. Engrenage différentiel (1) pour un véhicule selon la revendication 8, dans lequel ledit engrenage différentiel (1) pour un véhicule comprend un dispositif d'embrayage multi-plaque humide (7) pour commander un rapport de distribution de force motrice entre les roues avant et les roues arrières du véhicule, et dans lequel une force motrice est transmise depuis le dispositif d'embrayage multi-plaque humide (7) à ladite partie d'entrée (41) de l'arbre de transmission (13).

10. Engrenage différentiel (1) pour un véhicule selon l'une ou l'autre des revendications 8 et 9, dans lequel est prévue une pièce d'écartement (12) entre le premier palier (10) et le second palier (11) et dans lequel la pièce d'écartement (12) est constituée de préférence d'un distancier déformé plastiquement et peut générer une force de réaction à l'encontre d'une grandeur de déplacement, même petite.
